# EUROPÄISCHE PATENTSCHRIFT

(11) **EP 2 025 710 B1**
(45) Veröffentlichungstag und Bekanntmachung des Hinweises auf die Patenterteilung: **10.11.2010**
(21) Anmeldenummer: 08013823.3
(22) Anmeldetag: 01.08.2008
(51) Int. Cl.: C08K 5/5313, C08K 5/00, C08L 77/10

(54) **Flammschutzmittelmischung für thermoplastische Polymere sowie flammwidrige Polymere**
Flame retardant mixture for thermoplastic polymers and flame retardant polymers
Mélange de protection contre l'inflammation pour polymères thermoplastiques et polymères non inflammables

(30) Priorität: 06.08.2007 DE 102007037019
(43) Veröffentlichungstag der Anmeldung: 18.02.2009
(73) Patentinhaber: Clariant Finance (BVI) Limited, Road Town, Tortola (VG)
(72) Erfinder: Hörold, Sebastian, Dr., 86420 Diedorf (DE); Wanzke, Wolfgang, Dr., 86161 Augsburg (DE)
(74) Vertreter: Jacobi, Carola

(56) Entgegenhaltungen:
- WO-A-2005/033192
- DE-A1- 19 933 901
- DATABASE WPI Week 200757 Thomson Scientific, London, GB; AN 2007-602658 XP002500399 -& WO 2007/058170 A (ASAHI KASEI CHEM CORP) 24. Mai 2007 (2007-05-24) & EP 1 950 249 A (ASAHI CHEMICAL CORP [JP]) 30. Juli 2008 (2008-07-30)

## Beschreibung

Die vorliegende Erfindung betrifft eine Flammschutzmittelmischung für thermoplastische Polymere sowie flammwidrige Polymere.

Als Flammschutzmittel für teilaromatische, teilkristalline Polyamide die zu den thermoplastischen Polymeren gehören, werden bevorzugt Halogenverbindungen oder roter Phosphor eingesetzt, da diese bei Temperaturen von über 300 °C, wie sie für die Herstellung und Verarbeitung derartiger Formmassen notwendig sind, noch ausreichend thermische Stabilität aufweisen. Halogenhaltige flammgeschützte Polyamide sind aber neben anderen Nachteilen toxikologisch bedenklich, da sie bei der Entsorgung durch Verbrennen halogenhaltige Substanzen freisetzen. Polyamide, die roten Phosphor enthalten, besitzen eine dunkle Eigenfarbe, wodurch die Möglichkeiten zur Einfärbung beschränkt sind. Darüber hinaus sind bei der Herstellung und Verarbeitung von teilaromatischen Polyamiden mit rotem Phosphor als Flammschutzmittel wegen der erforderlichen hohen Temperaturen und der Bildung von toxischem Phosphin erhebliche Sicherheitsvorkehrungen notwendig.

Aus diesen Gründen werden Flammschutzmittelmischungen vorgeschlagen, welche die oben genannten Nachteile nicht besitzen.

Salze von Phosphinsäuren (Phosphinate) haben sich als wirksame flammhemmende Zusätze für thermoplastische Polymere erwiesen (DE-A-2 252 258 und DE-A-2 447 727). Calcium- und Aluminiumphosphinate sind in Polyestern als besonders effektiv beschrieben worden und beeinträchtigen die Materialeigenschaften der Polymerformmassen weniger als beispielsweise die Alkalimetallsalze (EP-A-0 699 708). In der DE-A-196 07 635 werden Calcium- und Aluminiumphosphinate als besonders effektive Flammschutzmittel für Polyamide beschrieben. Unter Polyamiden werden Polymere verstanden, die über eine Amidgruppe wiederkehrende Einheiten in der Polymerkette enthalten. Als besonders geeignete Polyamide werden Polyamid 6 und Polyamid 66 genannt. Daraus hergestellte Formmassen erreichen nach UL94 die Brandklasse V0 bei einer Probekörperdicke von 1,2 mm.

Darüber hinaus wurden synergistische Kombinationen von Phosphinaten mit bestimmten stickstoffhaltigen Verbindungen gefunden, die in einer ganzen Reihe von Polymeren als Flammschutzmittel effektiver wirken, als die Phosphinate allein (WO97/39053 sowie DE-A-197 34 437 und DE-A-197 37 727).

Unter anderem wurden Melamin und Melaminverbindungen als wirksame Synergisten beschrieben, beispielsweise Melamincyanurat und Melaminphosphat, die selbst auch eine gewisse Flammschutzwirkung in bestimmten Thermoplasten haben, in Kombination mit Phosphinaten aber deutlich wirksamer sind.

Auch höhermolekulare Derivate des Melamins wie die Kondensationsprodukte Melam, Melem und Melon sowie entsprechende Umsetzungsprodukte dieser Verbindungen mit Phosphorsäure wie Dimelaminpyrophosphat und Melaminpolyphosphate sind als Flammschutzmittel beschrieben worden. Die benötigten Zugabemengen in thermoplastischen Kunststoffen sind jedoch relativ hoch, insbesondere bei glasfaserverstärkten Materialien.

Die DE-A-103 16 873 beschreibt flammgeschützte Polyamidformmassen, bestehend aus 30 - 80 Gew.-% eines teilaromatischen, teilkristallinen Polyamids und 1 - 30 Gew.-% eines Phosphinsäure- oder Diphosphinsäuresalzes als Flammschutzmittel. In teilaromatischen Polyamiden wird eine bessere Wirksamkeit der Phosphinsäuresalze beschrieben als in aliphatischen Polyamiden.

Da man wegen der Miniaturisierung, insbesondere in der Elektronik-Industrie, sehr dünnwandige Komponenten herstellt, wird für die dafür eingesetzten Formmassen eine Brandklassierung gemäß UL94 von V0 bei 0,4 mm gefordert. Darüber hinaus ist eine gute Fließfähigkeit der Polyamide für dünnwandige Anwendungen wichtig.

Nachteilig bei den beschriebenen Zusätzen von Flammschutzmitteln ist der Rückgang der Fließfähigkeit im Vergleich zum nicht flammgeschützten Polyamid durch den Anteil an nichtschmelzenden Feststoffen.

Es war daher Aufgabe der vorliegenden Erfindung eine Flammschutzmittelmischung sowie gut fließende Polymere zur Verfügung zu stellen, die mit halogenfreiem Flammschutz UL 94 V-0 bei 0,4 mm Wandstärke erreichen und in ihrer Fließfähigkeit ähnliche Werte wie nicht flammgeschützte Polymere erreichen.

Es wurden nun überraschend gefunden, das Mischungen aus Aluminium- und Zinkphosphinaten in bestimmten Polymeren wirksamere Flammschutzmittel darstellen als Aluminium- oder Zinkphosphinate allein und zudem höhere Fließfähigkeiten erreicht werden können als bei Verwendung von Aluminiumphosphinaten allein. Es wurde weiterhin überraschend gefunden, das die hohe Wärmeformbeständigkeit der Polymere, insbesondere der Polyamide weitgehend erhalten bleibt nach Zusatz der Phosphinate und die Phosphinate/Polymer-Mischungen bei hohen Temperaturen verarbeitet werden können, ohne das es zu Polymerabbau oder Verfärbungen kommt.

Wegen ihrer Formbeständigkeit bei hohen Temperaturen und des günstigen Brandverhaltens eignen sich diese Polymere, insbesondere die Polyamide sehr gut zur Herstellung von dünnwandigen Formkörpern für die Elektro- und Elektronik-Industrie.

Die Erfindung betrifft daher eine Flammschutzmittelmischung für thermoplastische Polymere, enthaltend ein Phosphinsäuresalz der Formel (I) mit M = Al (Komponente
A) und ein schmelzbares Phosphinsäuresalz der Formel (I) mit M = Zn (Komponente B), 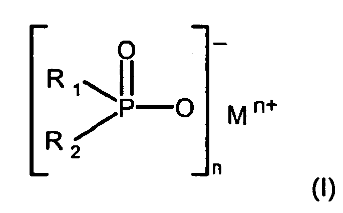
worin
R¹, R² gleich oder verschieden sind und C₁-C₆-Alkyl, linear oder verzweigt und/oder Aryl; n 1 bis 3; bedeuten, wobei Komponente A in 5 - 95 Gew.-% und Komponente B in 5 - 95 Gew.-% enthalten ist und wobei es sich bei den Polymeren um Polyamide handelt, die als aromatische Dicarbonsäuren Terephthalsäure oder Isophthalsäure enthalten.

Bevorzugt ist die Komponente in 50 - 95 Gew.-% und die Komponente B in 5 - 50 Gew.-% enthalten.

Die Erfindung betrifft ebenfalls flammwidrige Polymere, die als Flammschutzmittel eine Mischung aus einem Phosphinsäuresalz der Formel (I) mit M = Al (Komponente
A) und einem schmelzbaren Phosphinsäuresalz der Formel (I) mit M = Zn

### (Komponente B),

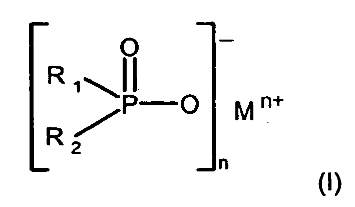

worin
R¹, R² gleich oder verschieden sind und C₁-C₆-Alkyl, linear oder verzweigt und/oder Aryl; n 1 bis 3; bedeuten, enthalten, und wobei es sich bei den Polymeren um Polyamide handelt, die als aromatische Dicarbonsäuren Terephthalsäure oder Isophthalsäure enthalten.

Bevorzugt sind R¹, R² gleich oder verschieden sind und bedeuten Methyl, Ethyl, n-Propyl, iso-Propyl, n-Butyl, tert.-Butyl, n-Pentyl und/oder Phenyl.

Bevorzugt handelt es sich - wenn es sich bei den Polymeren um Polyamide handelt - um solche Polyamide, die als aromatische Dicarbonsäuren Terephthalsäure oder Isophthalsäure enthalten.

Bevorzugt können die erfindungsgemäßen flammwidrigen Polymere als weitere Komponente C eine Stickstoff-, Phosphor- oder Phosphor-Stickstoff-Verbindung enthalten.

Bevorzugt handelt es sich bei der Komponente C um Melaminphosphat, Dimelaminphosphat, Melaminpyrophosphat, Melaminpolyphosphate, Melampolyphosphate, Melempolyphosphate und/oder Melonpolyphosphate.

Bevorzugt handelt es sich bei der Komponente C um Melaminkondensationsprodukte wie Melam, Melem und/oder Melon.

Bevorzugt enthält das erfindungsgemäße flammwidrige Polymer als Komponente C oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid, Guanidin und/oder Carbodiimide.

Besonders bevorzugt sind Melaminpolyphosphat oder Melamincyanurat.

Bevorzugt enthält das erfindungsgemäße flammwidrige Polymer als Komponente D eine synthetische anorganische Verbindung und/oder ein mineralisches Produkt.

Bevorzugt handelt es sich bei der Komponente D um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen.

Bevorzugt handelt sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumoxid, -hydroxid oder -phosphat oder Böhmit.

Besonders bevorzugt sind Zinkborat oder Böhmit.

Bevorzugt enthält das erfindungsgemäße flammwidrige Polymer 60 bis 97 Gew.-% Polymer, 2 bis 30 Gew.-% Komponente A und 1 bis 10 Gew.-% Komponente B.

Bevorzugt enthält das erfindungsgemäße flammwidrige Polymer auch 43 bis 93 Gew.-% Polymer, 5 bis 15 Gew.-% Komponente A, 2 bis 10 Gew.-% Komponente B, 0 bis 10 Gew.-% Komponente C und 0 bis 5 Gew.-% Komponente D.

Bevorzugte Polymere der Erfindung sind Polyamide.

Bevorzugt handelt es sich bei den Polyamiden um Polyamid 6, Polyamid 12, teilaromatische Polyamide und/oder Polyamid 66. Bevorzugt handelt es sich dabei um teilkristalline Polyamide.

Als erfindungsgemäß geeignete teilaromatische, teilkristalline Polyamide können entweder Homopolyamide oder Copolyamide eingesetzt werden, deren wiederkehrende Einheiten aus Dicarbonsäuren und Diaminen sowie aus Aminocarbonsäuren bzw. der entsprechenden Lactame abgeleitet sind. Geeignete Dicarbonsäuren sind aromatische und aliphatische Dicarbonsäuren wie beispielsweise Terephthalsäure, Isophthalsäure, Adipinsäure, Azeiainsäure, Sebazinsäure, Dodekandicarbonsäure und 1,4-Cyclohexandicarbonsäure. Geeignete Diamine sind aliphatische und cycloaliphatische Diamine wie beispielsweise Hexamethylendiamin, Nonamethylendiamin, Dekamethylerdiamin, Dodekarnethylendiamin, 2-Methylpentamethylendiamin, 1,4-Cyclohexandiamin, Di-(4-diaminocyclo-hexyl)-methan, Di-(3-methyl-4-aminocyclohexyl)-methan.
Geeignete Aminocarbonsäuren sind Aminocapronsäure und Aminolaurinsäure, die auch in Form der entsprechenden Lactame Caprolactam und Laurinlactam eingesetzt werden können.

Die Schmelzpunkte dieser teilaromatischen Polyamide liegen zwischen 280 und 340 °C, bevorzugt zwischen 295 und 325 °C.

Besonders bevorzugt bei den Polyamiden sind solche, die aus Terephtalsäure (TPS), Isophtalsäure (IPS) und Hexamethyldiamin oder aus Terephtalsäure, Adipinsäure und Hexamethyldiamin gebildet worden sind. Als günstige Verhältnisse haben sich dabei ca. 70:30 TPS:IPS bzw. 55:45 TPS:Adipinsäure herausgestellt. Die überlegenen Eigenschaften werden insbesondere durch diese beiden speziellen Polyamide realisiert.

Copolyamide sind solche Produkte, die aus mehr als einem Polyamid-bildenden Monomeren hergestellt werden. Durch die Auswahl der Monomeren und des Mischungsverhältnisses kann man die Eigenschaften der Polyamide in einem sehr weiten Bereich variieren. Gegenüber den aliphatischen Copolyamiden sind bestimmte Copolyamide mit aromatischen Monomeren interessante technische Produkte. Sie zeichnen sich durch eine höhere Glasübergangstemperatur und durch einen höheren Schmelzpunkt der teilkristallinen Bereiche und damit mit einer für die praktische Verwendung ausreichenden Wärmeformbeständigkeit aus. So lassen sich ausgehend von Terephthalsäure und/oder Isophthalsäure und Polyaminen wie Hexamethylendiamin teilkristalline Polyamide mit hoher Wärmeformbeständigkeit herstellen.

Erfindungsgemäß geeignete teilaromatische Copolyamide sind beispielsweise in Becker/Braun Kunststoff Handbuch 3/4, Polyamide, herausgegeben von L. Bottenbruch und R. Binsack, Kapitel 6, teilaromatische und aromatische Polyamide, S. 803-845, beschrieben, worauf ausdrücklich Bezug genommen wird.

Erfindungsgemäß geeignete teilaromatische Copolyamide können auch Blockcopolymere der vorgenannten Polyamide mit Polyolefinen, Olefincopolymeren, lonomeren, oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("IM-Polyamidsysteme").

Im Folgenden umfasst der Begriff "Phosphinsäuresalz" Salze der Phosphin- und Diphosphinsäuren und deren Polymere.

Die Phosphinsäuresalze, die in wässrigem Medium hergestellt werden, sind im Wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinsäuresalze sind beispielsweise:
Dimethylphosphinsäure, Ethyl-methylphosphinsäure, Diethylphosphinsäure, Methyln-propyl-phosphinsäure, Methyl-phenyl-phosphinsäure und Diphenylphosphinsäure.

In der vorliegenden Erfindung werden DEPAI (Aluminiumsalz der Diethylphosphinsäure) und DEPZn (Zinksalz der Diethylphosphinsäure) im Verhältnis von 7:1 bis 1:1, bevorzugt im Verhältnis 5:1 bis 2:1 und besonders bevorzugt im Verhältnis 5:1 bis 4:1 eingesetzt.

Die Salze der Phosphinsäuren gemäß der Erfindung können nach bekannten Methoden hergestellt werden, wie sie beispielsweise in der EP-A-0 699 708 näher beschrieben sind. Die Phosphinsäuren werden dabei beispielsweise in wässriger Lösung mit Metallcarbonaten, Metallhydroxiden oder Metalloxiden umgesetzt.

Die Menge der den Polymeren zuzusetzenden Phosphinsäuresalze-Mischung kann innerhalb weiter Grenzen variieren. Im Allgemeinen verwendet man 1 bis 50 Gew.-%, bezogen auf die Kunststoff-Formmasse. Die optimale Menge hängt von der Natur des Polymeren und der Art der Komponenten C und D ab. Bevorzugt sind 3 bis 40 Gew.-%, insbesondere 5 bis 30 Gew.-%, bezogen auf die Kunststoff-Formmasse.

Die vorgenannten Phosphinsäuresalze können für die erfindungsgemäße Flammschutzmittel-Kombination je nach Art des verwendeten Polymeren und der gewünschten Eigenschaften in verschiedener physikalischer Form angewendet werden. So können die Phosphinsäuresalze beispielsweise zur Erzielung einer besseren Dispersion im Polymeren zu einer feinteiligen Form vermahlen werden.
Die Phosphinsäuresalze, wie sie gemäß der Erfindung in der Flammschutzmittel-Kombination eingesetzt werden, sind thermisch stabil, zersetzen die Polymeren weder bei der Verarbeitung noch beeinflussen sie den Herstellprozess der Kunststoff-Formmasse. Die Phosphinsäuresalze sind unter den üblichen Herstellungs- und Verarbeitungsbedingungen für thermoplastische Polymere nicht flüchtig.

Die flammhemmenden Komponenten A und B sowie gegebenenfalls C und D können in die Polyamide eingearbeitet werden, indem etwa alle Bestandteile als Pulver und/oder Granulat in einem Mischer vorgemischt und anschließend in einem Compoundieraggregat (z. B. einem Doppelschneckenextruder) in der Polymerschmelze homogenisiert werden. Die Schmelze wird üblicherweise als Strang abgezogen, gekühlt und granuliert. Die Komponenten A und B sowie gegebenenfalls C und D können auch separat über eine Dosieranlage direkt in das Compoundieraggregat eingebracht werden.

Es ist ebenso möglich, die flammhemmenden Komponenten A und B sowie gegebenenfalls C und D einem fertigen Polymergranulat bzw. -pulver beizumischen und die Mischung direkt auf einer Spritzgussmaschine zu Formteilen zu verarbeiten.

Als weitere Komponenten können die erfindungsgemäßen Polyamide 5 - 60 Gew.-% an faser- oder teilchenförmigen Füllstoffen oder deren Mischungen enthalten. Als Beispiele für faserförmige Füllstoffe seien faserförmige Verstärkungsmittel wie Glasfasern, Kohlenstofffasern, Aramidfasern, Kaliumtitanatwhisker genannt, wobei Glasfasern bevorzugt sind. Die Einarbeitung der Glasfasern in die Formmassen kann entweder in Form endloser Stränge (Rovings) oder in geschnittener Form (Kurzglasfasern) erfolgen. Zur Verbesserung der Verträglichkeit mit den teilaromatischen Polyamiden können die verwendeten Glasfasern mit einer Schlichte und einem Haftvermittler ausgerüstet sein. Der Durchmesser der üblicherweise verwendeten Glasfaser liegt im Bereich von 6 bis 20 µm.
Als teilchenförmige Füllstoffe eignen sich unter anderen Glaskugeln, Kreide, gepulverter Quarz, Talkum, Wollastonit, Kaolin, Glimmer.
Übliche Additive sind beispielsweise Wärmeschutzmittel, Antioxidantien, Lichtschutzmittel, Gleitmittel, Entformungsmittel, Nukleierungsmittel, Pigmente, Farbstoffe, Antdripping-Mittel.

Die erfindungsgemäßen flammwidrigen Polyamide eignen sich zur Herstellung von Formkörpern, Filmen, Fäden und Fasern, beispielsweise durch Spritzgießen, Extrudieren oder Verpressen.

Der Brandschutz elektrischer und elektronischer Ausrüstungen ist in Vorschriften und Normen zur Produktsicherheit festgelegt. In den USA werden brandschutztechnische Prüf- und Zulassungsverfahren von Underwriters Laboratories (UL) durchgeführt. Die UL Vorschriften werden heute weltweit akzeptiert. Die Brandprüfungen für Kunststoffe wurden entwickelt, um den Widerstand der Materialien gegenüber Entzündung und Flammenausbreitung zu ermitteln.

Je nach Brandschutzanforderungen müssen die Materialien horizontale Brenntests (Klasse UL 94 HB oder die strengeren vertikalen Tests (UL 94 V2, V1 oder V-0) bestehen. Diese Prüfungen simulieren Zündquellen geringer Energie, die in Elektrogeräten auftreten und auf Kunststoffteile elektrischer Baugruppen einwirken können.

### Beispiele

1. Eingesetzte Komponenten Handelsübliche Polymere (Granulate):
   Polyamid 6.6: Durethan^{®} A 30 (Fa. Bayer AG, D)
   Teilaromatische Polyamide:
      Polyamid 6T/66: Zytel^{®} HTN FE 8200 (Fa. DuPont, USA): Polyamid aus Terephthalsäure, Diaminohexan, 2-Methyldiaminopentan
      Glasfasern: Vetrotex EC 10 983, Fa. Vetrotex, Frankreich, für Polyamide Glasfasern: Vetrotex EC 10 952, Fa. Vetrotex, Frankreich, für PBT
      Flammschutzmittelkomponenten (pulverförmig):
         Aluminiumsalz der Diethylphosphinsäure, im Folgenden als DEPAI bezeichnet
         Zinksalz der Diethylphosphinsäure, im Folgenden als DEPZn bezeichnet, Schmelzpunkt 200°C Böhmit: Apyral^{®} AOH 60, Fa. Nabaltec, D
         Zinkborat: Firebrake^{®} 500, Borax, USA
         Melaminpolyphosphat, im Folgenden als MPP bezeichnet, Melapur^{®} 200, Ciba SC, Schweiz Melamincyanurat, im Folgenden als MC bezeichnet, Melapur^{®} MC 50, Ciba SC, Schweiz
2. Herstellung, Verarbeitung und Prüfung von flammhemmenden Kunststoff-Formmassen

Die Polymere wurden auf einem Doppelschnecken-Extruder (Typ Leistritz ZSE 25/44) bei Temperaturen von 260 bis 280 °C (PA 6.6-GV) bzw. von 300 bis 320 °C (teilaromatische Polyamide) verarbeitet. Der homogenisierte Polymerstrang wurde abgezogen, im Wasserbad gekühlt und anschließend granuliert.
Die Flammschutzmittelkomponenten wurden in dem in den Tabellen angegebenen Verhältnis vermischt und über einen Seiteneinzug der Polymerschmelze zugegeben. Die Glasfasern wurden ebenfalls über einen Seiteneinzug zugegeben.

Nach ausreichender Trocknung wurden die Formmassen auf einer Spritzgießmaschine (Typ Arburg 320 C Allrounder) zu Prüfkörpern verarbeitet und anhand des UL 94-Tests (Underwriter Laboratories) und der Glühdrahtprüfung nach IEC 60695-2 auf Flammwidrigkeit geprüft und klassifiziert. Die Fließfähigkeit der Formmassen wurde durch Spritzen von Fließspiralen ermittelt. Die Länge des Fließweges ist ein Maß für die Fließfähigkeit unter Spritzgussbedingungen. Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt. Soweit nicht anders Angegeben, handelt es sich bei Mengenangaben immer um Gew.-%.

Die Tabelle 1 zeigt, dass mit DEPAI in teilaromatischem Polyamid in 15 % Dosierung ein V-0 erreicht, mit DEPZn in gleicher Konzentration nicht. Die Fließfähigkeit der Compounds ist mit DEPZn höher als mit DEPAI. Es wurde nun überraschend gefunden, dass DEPAl partiell durch DEPZn ersetzt werden kann bei Erhalt der Brandklasse, aber unter Verbesserung der Fließfähigkeit. Der Zusatz von Calciumstearat zur Verbesserung der Fließfähigkeit, wie es dem Stand der Technik entspricht, bewirkt dagegen nur eine vergleichsweise geringe Verbesserung der Fließlänge.

**Tabelle 1: DEPAI und DEPZn als Flammschutzmittel in glasfaserverstärktem PA 6T/66 (Vgl. = Vergleich)**

| Beispiele | 1 (Vgl.) | 2 (Vgl.) | 3 (Erf.) | 4 (Erf.) | 5 (Vgl.) |
|---|---|---|---|---|---|
| Polyamid 6T/66 | 55 | 55 | 55 | 55 | 54,65 |
| Glasfasern | 30 | 30 | 30 | 30 | 30 |
| DEPAI | 15 | | 13 | 10 | 15 |
| DEPZn | | 15 | 2 | 5 | |
| Calciumstearat | | | | | 0,35 |
| UL 94 0.8 mm | V-0 | n.k. | V-0 | V-0 | V-0 |
| Fließlänge in cm | 37 | 48 | 44 | 48 | 39 |

| | | | | | |
|---|---|---|---|---|---|
| *⁾ n.k. = nicht klassifizierbar | | | | | |

Die Tabelle 2 zeigt, dass die Kombination von DEPAl und DEPZn gute mechanische Werte liefert, vergleichbar mit denen des nicht flammgeschützten Polyamid Compounds. Es werden keine Verfärbungen und kein Polymerabbau beobachtet, trotz der Verarbeitungstemperatur des Polyamids 6T/66 von 300 °C.

**Tabelle 2: DEPAl und DEPZn als Flammschutzmittel in glasfaserverstärktem PA 6T/66 Mechanische Werte (Erf. = Erfindung)**

| Beispiel | 6 (Vgl.) | 7 (Vgl.) | 8 (Erf.) | 9 (Erf.) |
|---|---|---|---|---|
| PA 6T/66 | 70 | 55 | 55 | 55 |
| Glasfaser | 30 | 30 | 30 | 30 |
| DEPAI | | 15 | 13 | 10 |
| DEPZn | | | 2,0 | 5,0 |
| UL 94 0.8 mm | n.k. | V-0 | V-0 | V-0 |
| Fließlänge in cm | 47 | 44,1 | 50,7 | 56,3 |
| E-Modul [MPa]* | 10030 | 10730 | 10560 | 10540 |
| Reißfestigkeit [N/mm²] | 199 | 163 | 162 | 166 |
| Bruchdehnung [%]* | 3,2 | 3 | 2,8 | 2,8 |
| Schlagzähigkeit (Charpy) | 74,8 | 68,4 | 63,2 | 64,8 |
| Kerbschlagzähigkeit | 10,6 | 9,6 | 8,5 | 8,5 |

Die Tabelle 3 zeigt, dass Böhmit und Zinkborat synergistische Wirkung zu DEPAI haben, eine verbesserte Fließfähigkeit bei gleichzeitiger V-0 Einstufung ist auch hier durch die Kombination von DEPAI und DEPZn zu erreichen.

**Tabelle 3: DEPAl und DEPZn mit Zinkborat und Böhmit als Synergist in glasfaserverstärktem PA 6T/66**

| Beispiele | 10 (Vgl.) | 11 (Vgl.) | 12 (Erf.) | 13 (Erf.) | 14 (Erf.) |
|---|---|---|---|---|---|
| Polyamid 6T/66 | 55 | 55 | 55 | 55 | 55 |
| Glasfasern | 30 | 30 | 30 | 30 | 30 |
| DEPAI | 13 | 13 | 11 | 11 | 10 |
| DEPZn | | | 2 | 2 | 3 |
| Zinkborat | 2 | | 2 | | |
| Böhmit | | 2 | | 2 | 2 |
| UL 94 0.8 mm | V-0 | V-0 | V-0 | V-0 | V-0 |
| Fließlänge in cm | 37 | 38 | 44 | 45 | 47 |

| | | | | | |
|---|---|---|---|---|---|
| *) n.k. = nicht klassifizierbar | | | | | |

In aliphatischen Polyamiden ist mit einer Kombination von DEPAl mit MPP und Zinkborat ein V-0 zu erreichen (Beispiel 10). Mit DEPZn wird in einer vergleichbaren Rezeptur (Beispiel 11) keine Brandklasse erreicht. Überraschenderweise führt auch hier die Kombination von DEPAI und DEPZn zu gut fließenden flammwidrigen Polyamiden.

## Patentansprüche

1. Flammschutzmittelmischung für thermoplastische Polymere, enthaltend ein Phosphinsäuresalz der Formel (I) mit M = Al (Komponente A) und ein schmelzbares Phosphinsäuresalz der Formel (I) mit M = Zn (Komponente B), 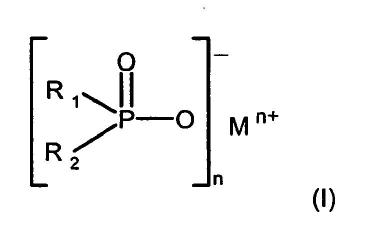 worin
R¹, R² gleich oder verschieden sind und C₁-C₆-Alkyl, linear oder verzweigt und/oder Aryl;
n 1 bis 3;
bedeuten, wobei Komponente A in 5 - 95 Gew.-% und Komponente B in 5-95 Gew.-% enthalten ist, und wobei es sich bei den Polymeren um Polyamide handelt, die als aromatische Dicarbonsäuren Terephthalsäure oder Isophthalsäure enthalten.

2. Flammschutzmittelmischung nach Anspruch 1, **dadurch gekennzeichnet, dass** Komponente A in 50 - 95 Gew.-% und Komponente B in 5 - 50 Gew.-% enthalten ist.

3. Flammwidrige Polymere, die als Flammschutzmittel eine Mischung aus einem Phosphinsäuresalz der Formel (I) mit M = Al (Komponente A) und einem schmelzbaren Phosphinsäuresalz der Formel (I) mit M = Zn (Komponente B), 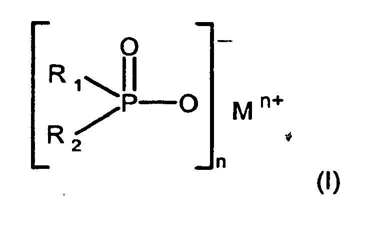 worin
R¹, R² gleich oder verschieden sind und C₁-C₆-Alkyl, linear oder verzweigt und/oder Aryl;
n 1 bis 3;
bedeuten, enthalten, und wobei es sich bei den Polymeren um Polyamide handelt, die als aromatische Dicarbonsäuren Terephthalsäure oder Isophthalsäure enthalten.

4. Flammwidrige Polymere nach Anspruch 3, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

5. Flammwidrige Polymere nach Anspruch 3 oder 4, **dadurch gekennzeichnet, dass** sie als weitere Komponente C eine Stickstoff-, Phosphor- oder Phosphorstickstoffverbindung enthalten.

6. Flammwidrige Polymere nach einem oder mehreren der Ansprüche 3 bis 5, **dadurch gekennzeichnet, dass** es sich bei der Komponente C um Melaminphosphat, Dimelaminphosphat, Melaminpyrophosphat, Melaminpolyphosphate, Melampolyphosphate, Melempolyphosphate und/oder Melonpolyphosphate handelt.

7. Flammwidrige Polymere nach einem oder mehreren der Ansprüche 3 bis 6, **dadurch gekennzeichnet, dass** es sich bei der Komponente C um Melaminkondensationsprodukte wie Melam, Melem und/oder Melon handelt.

8. Flammwidrige Polymere nach einem oder mehreren der Ansprüche 3 bis 6, **dadurch gekennzeichnet, dass** es sich bei der Komponente C um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid, Guanidin und/oder Carbodiimide handelt.

9. Flammwidrige Polymere nach einem oder mehreren der Ansprüche 3 bis 8, **dadurch gekennzeichnet, dass** sie als weitere Komponente D eine synthetische anorganische Verbindung und/oder ein mineralisches Produkt enthält.

10. Flammwidrige Polymere nach einem oder mehreren der Ansprüche 3 bis 9, **dadurch gekennzeichnet, dass** es sich bei der Komponente D um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen handelt.

11. Flammwidrige Polymere nach einem oder mehreren der Ansprüche 3 bis 10, **dadurch gekennzeichnet, dass** sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -stearat, -phosphat, -borat oder -sulfide; bei den Aluminiumverbindungen um Aluminiumhydroxid, Böhmit oder -phosphat handelt.

12. Flammwidrige Polymere nach einem oder mehreren der Ansprüche 3 bis 11, **dadurch gekennzeichnet, dass** sie 60 bis 97 Gew.-% Polymer, 2 bis 30 Gew.-% Komponente A und 1 bis 10 Gew.-% Komponente B enthalten.

13. Flammwidrige Polymere nach einem oder mehreren der Ansprüche 3 bis 11, **dadurch gekennzeichnet, dass** sie 40 bis 93 Gew.-% Polymer, 5 bis 15 Gew.-% Komponente A, 2 bis 10 Gew.-% Komponente B, 0 bis 10 Gew.-% Komponente C und 0 bis 5 Gew.-% Komponente D enthalten.

## Claims

1. A flame retardant mixture for thermoplastic polymers, comprising a phosphinic salt of the formula (I) where M = Al (component A) and a fusible phosphinic salt of the formula (I) where M = Zn (component B), 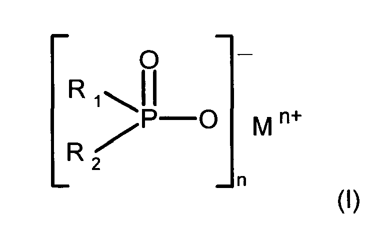 in which
R¹ and R² are identical or different and are C₁-C₆-alkyl, linear or branched, and/or aryl; and
n is from 1 to 3;
where the amount of component A present is from 5 to 95% by weight and the amount of component B present is from 5 to 95% by weight, and where the polymers are polyamides which contain, as aromatic dicarboxylic acids, terephthalic acid or isophthalic acid.

2. The flame retardant mixture as claimed in claim 1, wherein the amount of component A present is from 50 to 95% by weight and the amount of component B present is from 5 to 50% by weight.

3. A flame-retardant polymer which comprises, as flame retardant, a mixture composed of a phosphinic salt of the formula (I) where M = Al (component A) and a fusible phosphinic salt of the formula (I) where M = Zn (component B), 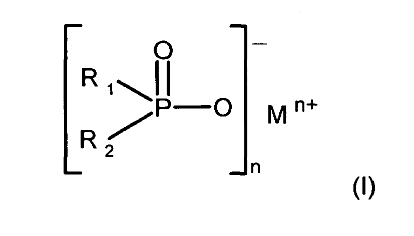 in which
R¹ and R² are identical or different and are C₁-C₆-alkyl, linear or branched, and/or aryl; and
n is from 1 to 3;
and where the polymers are polyamides which contain, as aromatic dicarboxylic acids, terephthalic acid or isophthalic acid.

4. The flame-retardant polymer as claimed in claim 3, wherein R¹ and R² are identical or different and are methyl, ethyl, n-propyl, isopropyl, n-butyl, tert-butyl, n-pentyl and/or phenyl.

5. The flame-retardant polymer as claimed in claim 3 or 4, which comprises, as further component C, a nitrogen compound, phosphorus compound, or phosphorus-nitrogen compound.

6. The flame-retardant polymer as claimed in one or more of claims 3 to 5, wherein component C is melamine phosphate, dimelamine phosphate, melamine pyrophosphate, melamine polyphosphates, melam polyphosphates, melem polyphosphates, and/or melon polyphosphates.

7. The flame-retardant polymer as claimed in one or more of claims 3 to 6, wherein component C is melamine condensates, such as melam, melem and/or melon.

8. The flame-retardant polymer as claimed in one or more of claims 3 to 6, wherein component C is oligomeric esters of tris(hydroxyethyl) isocyanurate with aromatic polycarboxylic acids, or is benzoguanamine, tris(hydroxyethyl) isocyanurate, allantoin, glycouril, melamine, melamine cyanurate, dicyandiamide, guanidine and/or carbodiimides.

9. The flame-retardant polymer as claimed in one or more of claims 3 to 8, which comprises, as further component D, a synthetic inorganic compound and/or a mineral product.

10. The flame-retardant polymer as claimed in one or more of claims 3 to 9, wherein component D is an oxygen compound of silicon, or is magnesium compounds, metal carbonates of metals of the second main group of the Periodic Table of the elements, red phosphorus, zinc compounds, or aluminum compounds.

11. The flame-retardant polymer as claimed in one or more of claims 3 to 10, wherein the oxygen compounds of silicon are salts and esters of orthosilica and condensates thereof, or are silicates, zeolites, and silicas, or are glass powder, glass-ceramic powder or ceramic powder; the magnesium compounds are magnesium hydroxide, hydrotalcites, magnesium carbonates, or magnesium calcium carbonates; the zinc compounds are zinc oxide, zinc stannate, zinc hydroxystannate, zinc stearate, zinc phosphate, zinc borate, or zinc sulfides; and the aluminum compounds are aluminum hydroxide, boehmite, or aluminum phosphate.

12. The flame-retardant polymer as claimed in one or more of claims 3 to 11, which comprises from 60 to 97% by weight of polymer, from 2 to 30% by weight of component A, and from 1 to 10% by weight of component B.

13. The flame-retardant polymer as claimed in one or more of claims 3 to 11, which comprises from 40 to 93% by weight of polymer, from 5 to 15% by weight of component A, from 2 to 10% by weight of component B, from 0 to 10% by weight of component C, and from 0 to 5% by weight of component D.

## Revendications

1. Mélange d'agents ignifuges pour polymères thermoplastiques, contenant un sel d'acide phosphinique de formule (I) avec M = Al (composant A) et un sel d'acide phosphinique fusible de formule (I) avec M = Zn (composant B), 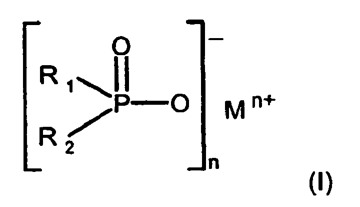 où
R¹, R² sont identiques ou différents et signifient C₁- C₆-alkyle, linéaire ou ramifié et/ou aryle ;
n vaut 1 à 3 ;
le composant A étant contenu à raison de 5-95% en poids et le composant B à raison de 5-95% en poids et où il s'agit, pour les polymères, de polyamides, qui contiennent comme acides dicarboxyliques aromatiques l'acide téréphtalique ou l'acide isophtalique.

2. Mélange d'agents ignifuges selon la revendication 1, **caractérisé en ce que** le composant A est contenu à raison de 50 à 95% en poids et le composant B à raison de 5 à 50% en poids.

3. Polymères ininflammables, qui contiennent comme agent ignifuge un mélange d'un sel d'acide phosphinique de formule (I) avec M = Al (Composant A) et d'un sel d'acide phosphinique fusible de formule (I) avec M = Zn (Composant B), 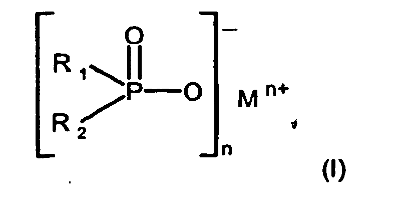 où
R¹, R² sont identiques ou différents et signifient C₁- C₆-alkyle, linéaire ou ramifié et/ou aryle ;
n vaut 1 à 3 ;
et où il s'agit, pour les polymères, de polyamides qui contiennent comme acides dicarboxyliques aromatiques de l'acide téréphtalique ou de l'acide isophtalique.

4. Polymères ininflammables selon la revendication 3, **caractérisés en ce que** R¹, R² sont identiques ou différents et signifient méthyle, éthyle, n-propyle, iso-propyle, n-butyle, tert-butyle, n-pentyle et/ou phényle.

5. Polymères ininflammables selon la revendication 3 ou 4, **caractérisés en ce qu'**ils contiennent comme autre composant C un composé azoté, phosphoré ou phosphoré-azoté.

6. Polymères ininflammables selon l'une ou plusieurs des revendications 3 à 5, **caractérisés en ce que**, pour le composant C, il s'agit de préférence de mélamine-phosphate, de dimélamine-phosphate, de mélamine-pyrophosphate, de mélamine-polyphosphates, de mélam-polyphosphates, de mélem-polyphosphates et/ou de mélon-polyphosphates.

7. Polymères ininflammables selon l'une ou plusieurs des revendications 3 à 6, **caractérisés en ce qu'**il s'agit, pour le composant C, de produits de condensation de la mélamine, tels que le mélam, le mélem et/ou le mélon.

8. Polymères ininflammables selon l'une ou plusieurs des revendications 3 à 6, **caractérisés en ce qu'**il s'agit, pour le composant C, d'esters oligomères du tris(hydroxyéthyl)isocyanurate avec des acides polycarboxyliques aromatiques, de benzoguanamine, de tris(hydroxyéthyl)isocyanurate, d'allantoïne, de glycolurile, de mélamine, de mélamine-cyanurate, de dicyanodiamide, de guanidine et/ou de carbodiimides.

9. Polymères ininflammables selon l'une ou plusieurs des revendications 3 à 8, **caractérisés en ce qu'**ils contiennent, comme autre composant D, un composé inorganique synthétique et/ou un produit minéral.

10. Polymères ininflammables selon l'une ou plusieurs des revendications 3 à 9, **caractérisés en ce qu'**il s'agit, pour le composant D, d'un composé oxygéné du silicium, de composés du magnésium, de carbonates métalliques de métaux du deuxième groupe principal du système périodique, de phosphore rouge, de composés du zinc et/ou d'aluminium.

11. Polymères ininflammables selon l'une ou plusieurs des revendications 3 à 10, **caractérisés en ce qu'**il s'agit, pour les composés oxygénés du silicium, de sels et d'esters de l'acide orthosilicique et leurs produits de condensation, de silicates, de zéolithes et de silices, de verre, de céramique de verre ou de poudre de céramique ; pour les composés du magnésium, il s'agit d'hydroxyde de magnésium, d'hydrotalcites, de carbonates de magnésium ou de carbonates de magnésium-calcium ; pour les composés du zinc, il s'agit d'oxyde de zinc, de stannate de zinc, d'hydroxystannate de zinc, de stéarate de zinc, de phosphate de zinc, de borate de zinc ou de sulfure de zinc ; pour les composés d'aluminium d'hydroxyde d'aluminium, de boehmite ou de phosphate d'aluminium.

12. Polymères ininflammables selon l'une ou plusieurs des revendications 3 à 11, **caractérisés en ce qu'**ils contiennent 60 à 97% en poids de polymère, 2 à 30% en poids de composant A et 1 à 10% en poids de composant B.

13. Polymères ininflammables selon l'une ou plusieurs des revendications 3 à 11, **caractérisés en ce qu'**ils contiennent 40 à 93% en poids de polymère, 5 à 15% en poids de composant A, 2 à 10% en poids de composant B, 0 à 10% en poids de composant C et 0 à 5% en poids de composant D.
